# EUROPEAN PATENT APPLICATION

(11) **EP 4 742 357 A1**
(43) Date of publication of application: **13.05.2026**
(21) Application number: 25758544.8
(22) Date of filing: 10.02.2025
(51) Int. Cl.: H01M 10/0585, H01M 4/134, H01M 10/0562, H01M 10/052, H01M 4/02

(54) **ALL-SOLID-STATE BATTERY AND METHOD FOR MANUFACTURING SAME**

(30) Priority: 22.02.2024 KR 20240025711
(71) Applicant: LG Energy Solution, Ltd., Seoul 07335 (KR)
(72) Inventor: PARK, Mihui, Daejeon 34122 (KR); LEE, Hyunjeong, Daejeon 34122 (KR); LEE, Hye Jin, Daejeon 34122 (KR); JUNG, Yi Jin, Daejeon 34122 (KR); SONG, Min Sang, Daejeon 34122 (KR); YOM, Jeeho, Daejeon 34122 (KR); LEE, Dong Chan, Daejeon 34122 (KR); CHOI, Ran, Daejeon 34122 (KR)
(74) Representative: Goddar, Heinz J.
(86) International application number: PCT/KR2025/001931
(87) International publication number: WO 2025/178298

(57) **Abstract**

The present disclosure relates to an all-solid-state battery and can provide an all-solid-state battery comprising a cathode, a solid electrolyte layer, an anodeless coating layer, and an anode current collector, and a manufacturing method therefor, wherein the anodeless coating layer includes amorphous carbon and silver nanoparticles, and when the anode-free coating layer is divided in the thickness direction into two equal parts, referred to as a first region and a second region in order from the side closer to the anode current collector, the ratio (C2/C1) of the silver nanoparticle content (C2) in the second region to the silver nanoparticle content (C1) in the first region falls within the range of 0.4 to 2 after charging/discharging. This configuration ensures excellent reactivity between silver nanoparticles and lithium ions, and high lithium ion conductivity. Even after charge and discharge cycles, the distribution characteristics of silver nanoparticles remain excellent, contributing to the uniformity of internal resistance in the battery and effectively regulating lithium dendrite growth. Accordingly, the all-solid-state battery of the present invention has an excellent capacity retention rate, particularly, an excellent capacity retention rate at a high rate, and also exhibits excellent lifespan characteristics.

## Description

### Technical Field

This application claims the benefit of priority on the basis of Korean Patent Application No. 2024-0025711, filed on February 22, 2024, and the entire contents disclosed in the Korean Patent Application are incorporated herein as a part of the specification. The present disclosure relates to an all-solid-state battery using lithium or a lithium alloy as a negative electrode active material and a method for manufacturing the same.

### Background Art

Recently, methods of using lithium as a negative electrode active material have been studied to increase the energy density of all-solid-state batteries. As a method of using lithium as a negative electrode active material, a method of using lithium or a lithium alloy as a negative electrode active material layer during a battery manufacturing process, or a method of forming a lithium layer during a charging process without forming a separate negative electrode active material layer on a negative electrode current collector during a battery manufacturing process, has been suggested.

However, if lithium is used as a negative electrode active material, lithium (metallic lithium) is precipitated on the negative electrode side during charging, and as the charging and discharging process is repeated, lithium dendrites grow through the gaps in a solid electrolyte layer, which causes defects such as battery short circuit or capacity reduction.

Therefore, in order to commercialize the method of using lithium as a negative electrode active material, the above defect is required to be improved.

### Disclosure of Invention

### Technical Goals

The present disclosure is to solve the above defect, and aims to provide an all-solid-state battery in which an anode-free coating layer includes irregularly shaped silver nanoparticles, thereby exhibiting excellent reactivity between silver nanoparticles and lithium ions and excellent lithium ion conductivity, and excellent distribution characteristics of silver nanoparticles even after charge and discharge, and accordingly, uniform distribution of resistance within the battery and effective control of lithium dendrite growth may be possible, and a method for manufacturing the same. Accordingly, the all-solid-state battery of the present disclosuremay exhibit excellent capacity retention, particularly excellent capacity retention at high rates, and excellent life characteristics.

### Technical solutions

The present disclosure relates to an all-solid-state battery using lithium or a lithium alloy as a negative electrode active material. The all-solid-state battery includes a positive electrode, a solid electrolyte layer, an anode-free coating layer and a negative electrode current collector. The anode-free coating layer includes amorphous carbon and silver nanoparticles, and when the anode-free coating layer is divided into two parts in a thickness direction and sequentially referred to as a first section and a second section starting from a section close to the negative electrode collector, a ratio (C₂/C₁) of the content of the silver nanoparticles (C₂) included in the second section to the content of the silver nanoparticles (C₁) included in the first section after charge and discharge is within a range of 0.4 to 2.

In an embodiment, when the anode-free coating layer is divided into three parts in the thickness direction and sequentially referred to as a first section, asecond section, and a third section from a section close to the negative electrode collector, a ratio ((C₂'+C₃')/C₁') of the sum (C₂'+C₃') of the contents of the silver nanoparticles included in the second section and the third section to the content (C₁') of the silver nanoparticles included in the first section after charge and discharge may be within a range of 0.4 to 5.

In an embodiment, the silver nanoparticles may be irregularly shaped.

In an embodiment, the maximum value of a difference among (200) plane crystal grain size, (220) plane crystal grain size, and (311) plane crystal grain size of the silver nanoparticles may be 1.5 nanometers (nm) or more. In an embodiment,a Brunauer, Emmett and Teller (BET) specific surface area of the silver nanoparticles may be 6 square meters per gram (m²/g) or less.

In an embodiment, an average pore size of the silver nanoparticles may be 40 nm or more.

In an embodiment, a total pore volume of the silver nanoparticles may be 0.065 cubic centimeters per gram (cm³/g) or more.

In an embodiment, the amorphous carbon may be one or more selected from the group consisting of carbon black, acetylene black, furnace black, Ketjen black and graphene.

In an embodiment, the silver nanoparticles may be included in a range of 10 parts by weight to 50 parts by weight relative to 100 parts by weight of the amorphous carbon.

In an embodiment, the anode-free coating layer may further include a binder.

In an embodiment, the solid electrolyte layer may include a sulfide-based solid electrolyte.

In an embodiment, the sulfide-based solid electrolyte may be one or more selected from Li₂S-P₂S₅-Li₂O, Li₂S-P₂S₅-Li₂O-LiI, Li₂S-LiBr-LiI-P₂S₅, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-Li₃PO₄, Li₂S-SiS₂-LiₚMO_{q}(p and q are positive numbers, and M is one of P, Si, Ge, B, Al, Ga and In), Li₂S-SiS₂-P₂S₅-LiI, Li₂S-P₂S₅, Li₂S-P₂S₅-LiX (X is a halogen atom), Li₂S-B₂S₃, Li₂S-P₂S₅-ZₘSₙ(m and n are positive numbers), Z is one of Ge, Zn or Ga, Li₂S-GeS₂, Li₇₋ₓPS₆₋ₓClₓ (0≤x≤2), Li₇₋ₓPS₆₋ₓBrₓ(0≤x≤2) and Li₇₋ₓPS₆₋ₓIₓ(0≤x≤2).

In an embodiment, the all-solid-state batteryof the present disclosure has a 1.0 C-rate (C) capacity retention of 88% or more compared to 0.1 C capacity.

The present disclosure also relates to a method for manufacturing an all-solid-state battery using lithium or a lithium alloy as a negative electrode active material. The method for manufacturing an all-solid-state battery includes forming an anode-free coating layer on a negative electrode current collector. The forming of the anode-free coating layer on the negative electrode current collector, includes applying a composition for forming an anode-free coating layer including amorphous carbon and silver nanoparticles, and drying the applied composition for forming an anode-free coating layer to form an anode-free coating layer. When the anode-free coating layer is divided into two parts in a thickness direction and sequentially referred to as a first section and a second section starting from a section close to the negative electrode current collector, a ratio (C₂/C₁) of the content of the silver nanoparticles (C₂) included in the second section to the content of the silver nanoparticles (C₁) included in the first section after charge and discharge is within a range of 0.4 to 2.

In an embodiment, the silver nanoparticles may beirregularly shaped.

### Effects

The present disclosure is to solve the above defect, and an all-solid-state battery may be provided, wherein, by including irregularly shaped silver nanoparticles, the reactivity between silver nanoparticles and lithium ions, and lithium ion conductivity are excellent, and the distribution characteristics of silver nanoparticles are excellent even after charge and discharge, enabling uniform distribution of resistance within the battery, and also effectively controlling lithium dendrite growth. Accordingly, the all-solid-state battery of the present disclosure may have excellent capacity retention, particularly excellent capacity retention at high rates, and also excellent life characteristics.

### Brief Description of Drawings

FIG. 1 shows an embodiment of a schematic diagram of anode-free coating layers of the Example and Comparative Example.
FIG. 2 shows scanning electron microscopy (SEM) images of silver nanoparticles of the Example.
FIG. 3 shows SEM images of silver nanoparticles of the Comparative Example.
FIG. 4 shows images confirming the distribution of amorphous carbon and silver nanoparticles in anode-free coating layers through scanning electron microscopy/energy-dispersive X-ray spectroscopy (SEM/EDS) measurement for samples which have been respectively charged and discharged once under certain conditions with respect to all-solid-state batteries (pouch-type monocells) of the Example and Comparative Example.
FIG. 5 shows images confirming the distribution of amorphous carbon and silver nanoparticles in anode-free coating layers through backscatter electron (BSE) measurement for samples which have been respectively charged and discharged once under certain conditions with respect toall-solid-state batteries (pouch-type monocells) of the Example and Comparative Example.
FIGS. 6 and 7 are SEM images taken for a sample of an all-solid-state battery (a pouch-type monocell) of the Example, that has been charged and discharged 166 times under certain conditions, and an anode-free coating layer positioned between a negative electrode current collector (upper part) and a solid electrolyte (lower part) has been divided into 2 parts (FIG. 6) or 3 parts (FIG. 7) in a thickness direction, where the silver nanoparticles in each section and the remaining area are separated.
FIGS. 8 and 9 are SEM images taken for a sample of an all-solid-state battery (a pouch-type monocell) of the Comparative Example, that has been charged and discharged 147 times under certain conditions, and an anode-free coating layer positioned between a negative electrode current collector (upper part) and a solid electrolyte (lower part) has been divided into 2 parts (FIG. 8) or 3 parts (FIG. 9) in a thickness direction, where the silver nanoparticles in each section and the remaining area are separated.
FIG. 10 is a graph showing the X-ray diffraction (XRD) analysis results of silver nanoparticles for the Example and Comparative Example.
FIG. 11 is a graph showing the capacity retention evaluation results according to C-rate for the Example and Comparative Example.
FIG. 12 is a graph showing the capacity retention evaluation results according to cycle for the Example and Comparative Example.

### Best Mode for Carrying Out the Invention

Terms or words used in this specification and claims should not be construed as limited to their common or dictionary meanings, and it should be interpreted as meaning and concept consistent with the technical idea of the present disclosure based on the principle that the inventor may appropriately define the concept of terms in order to explain his or her invention in the best way.

Therefore, it is understood that the configuration of an embodiment described in this specification is one of the most desired embodiments of the present disclosure and does not represent the entire technical idea of the present disclosure, so various equivalents and modification examples that can replace the embodiments at the time of filing the present application may exist.

In this specification, singular expressions include plural expressions unless the context clearly indicates otherwise.

In this specification, if a part "includes" a certain element, it means that the part may further include other elements rather than excluding other elements, unless specifically stated to the contrary. Accordingly, for example, a composition including compound A may include compounds other than A. However, in certain embodiments, the term "including" also encompasses more limited meanings of "consisting essentially/inherently of" and "consisting of," and for example, "a composition including compound A" may also consist (essentially/inherently) of compound A.

In connection with this, as used in this specification, it should be understood that terms such as "being provided with" or "having" are intended to designate the presence of implemented features, numbers, operations, components, or combinations thereof, but not exclude in advance the possibility of the presence or addition of one or more other features, numbers, operations, components, or combinations thereof.

In this specification, if an arbitrary layer is located "on" or "between" another arbitrary layer(s), not only a case where such member is in contact with another layer, but also a case where another layer or substance exists between the two layers are included.

If amounts, concentrations, or other values or parameters are given as listings of ranges, desirable ranges, desirable upper limits and desirable lower limits in this specification, it is to be understood that all ranges that may be formed from any pair of any upper range limits or desirable values and any lower range limits or desirable values, are specifically disclosed, regardless of whether the range is separately disclosed. If a range of numeric values is referred to in this specification, unless otherwise stated, for example, unless there is a limited term such as greater than and less than, the range is intended to include the endpoint values and all integers and fractions within the range. The scope of the present disclosure is not intended to be limited to the specific values referred to when defining arange.

Among the physical properties referred to in this specification, in cases where a measurement temperature affects relevant physical properties, unless otherwise specified, the physical properties are measured at room temperature. The term room temperature is a natural temperature that is not heated or reduced, and may mean, for example, any temperature in a range of about 10 degrees Celsius (°C) to 30°C, about 23°C, or about 25°C. Additionally, unless otherwise specified, the unit of the temperature in this specification is °C.

In addition, among the physical properties referred to in this specification, in cases where a measurement pressure affects relevant physical properties, unless otherwise specified, the physical properties are measured at normal pressure, that is, atmospheric pressure (about 1 atm).

In this specification, the term "all-solid-state battery" may mean an all-solid-state secondary battery, and may also be referred to as a cell, a secondary battery, or a battery.

In this specification, the term "anode-free coating layer" means a coating layer formed between a negative electrode current collector and a solid electrolyte layer in an all-solid-state battery in which lithium is absorbed into the anode-free coating layer during charging, and when the charge capacity of the anode-free coating layer is exceeded, lithium is precipitated between the negative electrode current collector and the solid electrolyte layer to form a metal layer, and when discharging, lithium in the anode-free coating layer and the lithium metal layer is ionized and moves toward a positive electrode, and may have a different configuration and operating mechanism from a common negative electrode active material layer. The anode-free coating layer may act as a protective layer of the lithium metal layer by covering the lithium metal layer formed on the negative electrode current collector during the charging process, and may suppress the precipitation and growth of lithium dendrites, thereby suppressing short-circuiting and capacity reduction of the all-solid-state battery and improving performance or the like.

A first aspect of the present disclosure relates to an all-solid-state battery using lithium or a lithium alloy as a negative electrode active material.

The all-solid-state battery of the present disclosure may include, for example, a positive electrode, a solid electrolyte layer, an anode-free coating layer, and a negative electrode current collector, and the anode-free coating layer may include amorphous carbon and silver nanoparticles. When the anode-free coating layer is divided into two parts in the thickness direction and sequentially referred to as a first section and a second section starting from a section close to the negative electrode current collector, the ratio (C₂/C₁) of the content (C₂) of the silver nanoparticles included in the second section to the content (C₁) of the silver nanoparticles included in the first section after charge and discharge may be, for example, characterized in being within a range of 0.4 to 2.

During the charging process, lithium ions react with silver nanoparticles in the anode-free coating layer to form a lithium-silver (Li-Ag) alloy, and the lithium-silver alloy moves toward a surface close to the negative electrode current collector in the anode-free coating layer, and after the lithium ion charging capacity of the anode-free coating layer is exceeded, lithium is precipitated between the negative electrode current collector and the anode-free coating layer to form a lithium metal layer. Meanwhile, during the discharging process, lithium ions move from the lithium metal layer and/or the lithium-silver alloy toward the positive electrode. In this case, in the case of introducing common spherical silver nanoparticles, it seems that the silver nanoparticles remain concentrated in an area close to the negative electrode current collector even after discharge during the repeated charging and discharging process, and thus are not uniformly distributed throughout the anode-free coating layer. However, in the case of the present disclosure, although the reason has not been clearly identified, it is confirmed that the silver nanoparticles may be uniformly distributed throughout the anode-free coating layer even after charging and discharging by including silver nanoparticles having different characteristics from common silver nanoparticles. Accordingly, the present disclosure may provide an all-solid-state battery in which the reactivity between silver nanoparticles and lithium ions, and lithium ion conductivity may be excellently maintained, and in particular, the capacity retention and life characteristics at high rates may be excellent.

In the present disclosure, the ratio (C₂/C₁) of the content (C₂) of the silver nanoparticles included in the second section to the content (C₁) of the silver nanoparticles included in the first section after charge and discharge may be, in another embodiment, 0.5 or more, 0.6 or more, 0.7 or more, 0.8 or more, or 0.9 or more, or 1.9 or less, 1.8 or less, 1.7 or less, 1.6 or less, 1.5 or less, or 1.4 or less. Since the ratio (C₂/C₁) of the content of the silver nanoparticles is defined by a relative ratio, the absolute values of C₁ and C₂ do not need to be measured, and it may also be possible to calculate the values through the measurement of other indicators. In this specification, the content (Cₙ) of the silver nanoparticles included in the nth section (n is an integer greater than or equal to 1) may be proportional to, for example, the weight (Wₙ), volume (Vₙ) of the silver nanoparticles included in the nth section, or the area (Aₙ) occupied by the silver nanoparticles in a vertical cross-sectional photograph. If the content is calculated based on the area, the content may be measured using an Image Analysis System as in the evaluation example described later. However, in this case, the brightness criterion for distinguishing between silver nanoparticles and other areas is not limited to an absolute value, but may be distinguished if there is a brightness difference that may distinguish between different substances.

In the present disclosure, when the anode-free coating layer is divided into three parts in the thickness direction and sequentially referred to as a first section, a second section, and a third section from a section close to the negative electrode current collector, the ratio ((C₂'+C₃')/C₁') of the sum (C₂'+C₃') of the contents of the silver nanoparticles included in the second section and the third section to the content (C₁') of the silver nanoparticles included in the first section after charge and discharge may be, for example, in a range of 0.4 to 5. The ratio ((C₂'+C₃')/C₁') of the sum (C₂'+C₃') of the contents of the silver nanoparticles included in the second section and the third section to the content (C₁') of the silver nanoparticles included in the first section may be, in another embodiment, 0.5 or more, 0.6 or more, 0.7 or more, 0.8 or more, 0.9 or more, 1.0 or more, 1.1 or more, 1.2 or more, 1.3 or more, 1.4 or more, 1.5 or more, 1.6 or more, 1.7 or more, 1.8 or more, or 1.9 or more, or 4.5 or less, 4 or less, 3.5 or less, 3 or less, 2.5 or less, 2.4 or less, 2.3 or less, 2.2 or less, or 2.1 or less. In this specification, the content (Cₙ') of the silver nanoparticles included in the n'th section (n' is an integer greater than or equal to 1) may be proportional to, for example, the weight (Wₙ'), volume (Vₙ') of the silver nanoparticles included in the n'th section, or the area (Aₙ') occupied by the silver nanoparticles in a vertical cross-sectional photograph.

In the present disclosure, the silver nanoparticles may be characterized by, for example, being irregularly shaped. In this specification, the irregularly shaped silver nanoparticles may mean any shape other than a spherical shape, in which the silver nanoparticles have a constant diameter or the like regardless of direction.

More specifically, in this specification, the irregularly shaped silver nanoparticles may mean that the deviation of grain sizes of representative planes according to X-ray diffraction analysis (XRD) is large, and for example, it may mean that the maximum value of the difference among (200) plane grain size, (220) plane grain size, and (311) plane grain size of the silver nanoparticles is 1.5 nanometers (nm) or more. In this specification, the maximum value of the difference among (200) plane grain size, (220) plane grain size, and (311) plane grain size may mean the largest value when all differences between the grain sizes of the planes are derived. The X-ray diffraction analysis may be performed in a manner according to an evaluation example described later. The maximum value of the difference between (200) plane grain size, (220) plane grain size and (311) plane grain size of the silver nanoparticles may be, in another embodiment, 1.6 nm or more, 1.7 nm or more, 1.8 nm or more, 1.9 nm or more, 2.0 nm or more, 2.1 nm or more, 2.2 nm or more, 2.3 nm or more, 2.4 nm or more, 2.5 nm or more, 2.6 nm or more, 2.7 nm or more, 2.8 nm or more, 2.9 nm or more, 3.0 nm or more, 3.1 nm or more, 3.2 nm or more, 3.3 nm or more, 3.4 nm or more, 3.5 nm or more, 3.6 nm or more, or 3.7 nm or less, or 20 nm or less, 15 nm or less, 10 nm or less or 5 nm or less. In this way, it may be inferred that the particles grew irregularlly from the large crystal grain size deviations of (200) plane, (220) plane, and (311) plane of the silver nanoparticles in the present disclosure.

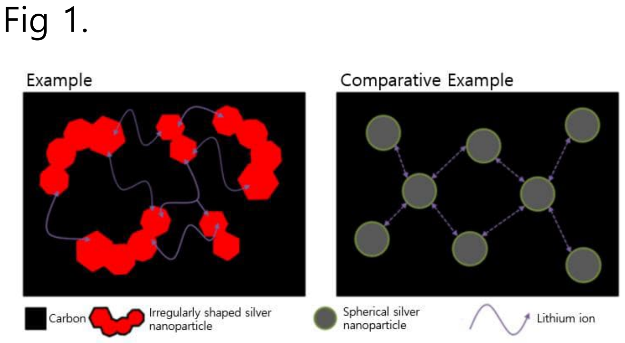

In the present disclosure, the silver nanoparticles may be characterized by, for example, having a Brunauer, Emmett and Teller (BET) surface area of 6 square meters per gram (m²/g) or less. The BET surface area of the silver nanoparticles may be measured in a manner according to the evaluation example described later. In the present disclosure, the silver nanoparticles may have, in another embodiment, a BET surface area of 5.5 m²/g or less, 5 m²/g or less, 4.5 m²/g or less, or 4 m²/g or less, or 0.5 m²/g or more, 1 m²/g or more, 1.5 m²/g or more, 2 m²/g or more, 2.5 m²/g or more, 3 m²/g or more, or 3.5 m²/g or more. The larger the BET surface area of the particle, the higher the possibility that the reactivity with other surrounding substances may increase. Therefore, silver nanoparticles in a spherical shape, which are commonly known to have a large BET surface area, have been introduced to increase the reactivity with lithium ions. However, the silver nanoparticles of the present disclosure may have excellent reactivity with lithium ions despite having a smaller BET surface area than common spherical silver nanoparticles. Although the clear reason has not been identified, the silver nanoparticles of the present disclosure may have a shape including a neck, for example, as shown in FIG. 1, and it is presumed that the neck theoretically has high surface energy and thus contributes to the increase in reactivity with lithium ions. In this specification, the term neck may mean a sunken portion compared to adjacent portions in irregularly shaped silver nanoparticles.

In the present disclosure, the silver nanoparticles may be characterized by having an average pore size of, for example, 40 nm or more. In this specification, the average pore size of the silver nanoparticles does not mean the average pore size of the pores contained in the silver nanoparticles themselves, but may mean the average size of the pores formed between the particles when the silver nanoparticles are packed in a manner according to the evaluation example described later. In this specification, the average pore size may have the same meaning as an average pore diameter. The silver nanoparticles of the present disclosure may have an average pore size of, in another embodiment, 45 nm or more, 50 nm or more, 55 nm or more, 60 nm or more, 65 nm or more, 70 nm or more, or 75 nm or more, or 100 nm or less, 95 nm or less, 90 nm or less, 85 nm or less, or 80 nm or less.

In the present disclosure, the silver nanoparticles may be characterized by, for example, having a total pore volume of 0.065 cubic centimeters per gram (cm³/g) or more. In this specification, the total pore volume of silver nanoparticles does not mean the total volume of pores contained in the silver nanoparticles themselves, but may mean the total volume of pores formed between particles when silver nanoparticle(s) are packed in a manner according to the evaluation example described later. The silver nanoparticles of the present disclosure may have a total pore volume of, in another embodiment, 0.067 cm³/g or more, 0.069 cm³/g or more, 0.071 cm³/g or more, 0.073 cm³/g or more, or 0.075 cm³/g or more, 1 cm³/g or less, 0.9 cm³/g or less, 0.8 cm³/g or less, 0.7 cm³/g or less, 0.6 cm³/g or less, 0.5 cm³/g or less, 0.4 cm³/g or less, 0.3 cm³/g or less, 0.2 cm³/g or less, 0.1 cm³/g or less, 0.09 cm³/g or less, or 0.08 cm³/g or less.

The present disclosure has excellent reactivity between silver nanoparticles and lithium ions and excellent lithium ion conductivity, since the anode-free coating layer includes silver nanoparticles having the above-described characteristics, and the distribution characteristics of the silver nanoparticles are excellent even after charge and discharge, enabling uniform resistance distribution within the battery and effective control of lithium dendrite growth, and accordingly, the all-solid-state battery of the present disclosure has excellent capacity retention especially at high rates and may also have excellent life characteristics.

In the present disclosure, the amorphous carbon may be one or more selected from the group consisting of, for example, carbon black, acetylene black, furnace black, Ketjen black, and graphene.

In the present disclosure, the average particle diameter of the primary particles of the amorphous carbon may be, for example, less than 100 nm. The average particle diameter of the primary particles may mean an average particle diameter based on volume (D₅₀). The average particle diameter of the primary particles may be, for example, measured by transmission electron microscopy (TEM), but is not limited thereto, and may be measured by a commonly known method used in the art. The average primary particle diameter of the amorphous carbon may be, in another embodiment, 95 nm or less, 90 nm or less, 85 nm or less, 80 nm or less, 75 nm or less, 70 nm or less, 65 nm or less, 60 nm or less, 55 nm or less, 50 nm or less, or 45 nm or less, or 5 nm or more, 10 nm or more, 15 nm or more, 20 nm or more, 25 nm or more, 30 nm or more, 35 nm or more, or 40 nm or more. The present disclosure controls the average primary particle diameter of the amorphous carbon within the above range, thereby reducing the occurrence of cracks during charging of an all-solid-state battery, thereby improving the lifespan of the battery, and providing a path through which lithium ions may efficiently move, thereby further improving performance.

The all-solid-state battery of the present disclosure, by including amorphous carbon having the above characteristics in the anode-free coating layer, may transfer lithium ions supplied from a positive electrode direction during charging the battery toward the negative electrode current collector direction to which negative charges are supplied, so as to uniformly form a lithium metal layer between the anode-free coating layer and the negative electrode current collector.

The amorphous carbon may be included in an amount of, for example, 40 parts by weight or more based on 100 parts by weight (dry weight) of the anode-free coating layer. In another embodiment, the amorphous carbon may be included in an amount of 45 parts by weight or more, 50 parts by weight or more, 55 parts by weight or more, 60 parts by weight or more, or 65 parts by weight or more, or 95 parts by weight or less, 90 parts by weight or less, 85 parts by weight or less, 80 parts by weight or less, or 75 parts by weight or less based on 100 parts by weight (dry weight) of the anode-free coating layer.

The anode-free coating layer may be characterized by including the silver nanoparticles in an amount of, for example, 10 to 50 parts by weight relative to 100 parts by weight of the amorphous carbon. The all-solid-state battery of the present disclosure may include the silver nanoparticles in an amount of, for example, 15 parts by weight or more, 20 parts by weight or more, 25 parts by weight or more, or 30 parts by weight or more, or 45 parts by weight or less, 40 parts by weight or less, or 35 parts by weight or less relative to 100 parts by weight of the amorphous carbon. The all-solid-state battery of the present disclosure may provide an all-solid-state battery having excellent cycle characteristics by introducing the amorphous carbon together with the silver nanoparticles.

The anode-free coating layer may further include one or more lithium-friendly elements selected from the group consisting of, for example, gold (Au), platinum (Pt), palladium (Pd), silicon (Si), aluminum (Al), bismuth (Bi), tin (Sn) and zinc (Zn).

The particle diameter of the lithium-friendly element may be, for example, in a range of 10 to 1000 nm. The particle diameter may mean a maximum particle diameter, a minimum particle diameter, or an average particle diameter. The particle diameter of the lithium-friendly element may be, in another embodiment, 20 nm or more, 30 nm or more, 40 nm or more, or 500 nm or less, 400 nm or less, 300 nm or less, 200 nm or less, or 100 nm or less, but is not limited thereto.

The anode-free coating layer of the present disclosure may further include, for example, a binder. The binder may be, for example, an aqueous binder, an organic binder, or a combination thereof. The binder may be, for example, polyvinyl alcohol, carboxymethyl cellulose, hydroxypropyl cellulose, diacetyl cellulose, polyvinylidene fluoride, polyvinyl chloride, carboxylated polyvinyl chloride, polyvinyl fluoride, a polymer containing ethylene oxide, polyvinyl pyrrolidone, polyurethane, polytetrafluoroethylene, polyvinylidene, fluoride, polyethylene, polypropylene, styrene-butadiene rubber, acrylate styrene-butadiene rubber, an epoxy resin, nylon, or a combination thereof. The aqueous binder may be, for example, styrene butadiene rubber, carboxymethyl cellulose, or a combination thereof. The organic binder may be, for example, polytetrafluoroethylene, polyvinylidene fluoride, or a combination thereof.

The binder may be characterized by being included in an amount of, for example, 1 to 20 parts by weight relative to 100 parts by weight of the amorphous carbon. The weight ratio of the binder relative to the amorphous carbon may mean a converted value based on the solid content of the binder, that is, the dry weight. In another embodiment, the binder may be included in an amount of 2 parts by weight or more, 3 parts by weight or more, 4 parts by weight or more, 5 parts by weight or more, 6 parts by weight or more, 7 parts by weight or more, or 8 parts by weight or more, or 19 parts by weight or less, 18 parts by weight or less, 17 parts by weight or less, 16 parts by weight or less, 15 parts by weight or less, 14 parts by weight or less, 13 parts by weight or less, 12 parts by weight or less, 11 parts by weight or less, or 10 parts by weight or less relative to 100 parts by weight of the amorphous carbon.

In the present disclosure, by controlling the weight ratio between the components included in the anode-free coating layer as described above, an all-solid-state battery having excellent performance and life characteristics may be provided.

In the present disclosure, the anode-free coating layer may further include, for example, a solvent. In this specification, the meaning that the anode-free coating layer further includes a solvent may mean that a solvent is used in the process of manufacturing the anode-free coating layer, and may not mean that the anode-free coating layer finally manufactured through drying or the like contains a solvent. Water, N-methylpyrrolidone (NMP) or the like may be used as the solvent.

In the present disclosure, the anode-free coating layer may further include, for example, other additives. As the other additives, fillers, coating agents, dispersants, ion conductive assistants or the like used in common all-solid-state batteries may be used without limitation, as long as they do not impede the purpose of the present disclosure.

In the present disclosure, the anode-free coating layer may be manufactured, for example, by applying a slurry in which a material constituting the anode-free coating layer is dispersed onto a negative electrode current collector and drying.

In the present disclosure, the thickness of the anode-free coating layer may be 50% or less, 40% or less, 30% or less, 20% or less, 10% or less, or 5% or less of the thickness of the positive electrode active material layer described below. The thickness of the anode-free coating layer may be, for example, in a range of 1 to 20 micrometers (µm), 5 to 18 µm, or 9 to 15 µm. By controlling the thickness of the anode-free coating layer as described above, lithium dendrites formed between the anode-free coating layer and the negative electrode current collector described below may be controlled to prevent the anode-free coating layer from collapsing, thereby improving the cycle characteristics, improving the energy density, and also reducing the internal resistance of the all-solid-state battery.

The anode-free coating layer of the present disclosure may have, for example, a porosity in a range of 50 to 80%. The porosity of the anode-free coating layer may be measured by a known manner. In another embodiment, the porosity of the anode-free coating layer may be, but is not limited to, 55% or more, 60% or more, or 65% or more, or 75% or less, or 70% or less.

The positive electrode may include, for example, a positive electrode current collector and/or a positive electrode active material layer.

The positive electrode current collector may use any known metal that may be used as a current collector for an all-solid-state battery. The positive electrode current collector may use, for example, a plate, mesh, or foil composed of copper (Cu), nickel (Ni), aluminum (Al), vanadium (V), gold (Au), platinum (Pt), chromium (Cr), iron (Fe), zinc (Zn), indium (In), germanium (Ge), lithium (Li), magnesium (Mg), stainless steel, titanium (Ti), cobalt (Co), or an alloy thereof. The positive electrode current collector may be omitted in some cases.

The positive electrode active material layer may include, for example, a positive electrode active material, a solid electrolyte, a binder, and/or a conductive material.

The positive electrode active material reversibly absorbs and desorbs lithium ions. The positive electrode active material may be, for example, lithium transition metal oxides such as lithium cobalt oxide (LCO), lithium nickel oxide, lithium nickel cobalt oxide, lithium nickel cobalt aluminum oxide (NCA), lithium nickel cobalt manganese oxide (NCM), lithium manganate and lithium iron phosphate, nickel sulfide, copper sulfide, lithium sulfide, iron oxide, or vanadium oxide, but is not limited thereto, and any positive electrode active material used in the relevant technical field may be used. The positive electrode active materials may be used alone or in combination of two or more.

The lithium transition metal oxide may be, for example, a compound represented by any one among LiₐA_{1-b}B_{b}D₂ (where 0.90≤a≤1 and 0≤b≤0.5); LiₐNi_{1-b-c}Co_{b}B_{c}O_{2-α}F₂ (where 0.90≤a≤1, 0≤b≤0.5, 0≤c≤0.05 and 0<α<2); LiₐNi_{1-b-c}Mn_{b}B_{c}D_{α} (where 0.90≤a≤1, 0≤b≤0.5, 0≤c≤0.05 and 0≤α≤2); LiₐNi_{1-b-c}Co_{b}B_{c}D_{α} (where 0.90≤a≤1, 0≤b≤0.5, 0≤c≤0.05 and 0<α≤2); LiₐE_{1-b}B_{b}O_{2-c}D_{c} (where 0.90≤a≤1, 0≤b≤0.5 and 0≤c≤0.05); LiE_{2-b}B_{b}O_{4-c}D_{c} (where 0≤b≤0.5 and 0≤c≤0.05); LiₐNi_{1-b-c}Co_{b}B_{c}O_{2-α}F_{α}(where 0.90≤a≤1, 0≤b≤0.5, 0≤c≤0.05 and 0<α<2); LiₐCoG_{b}O₂ (where 0.90≤a≤1 and 0.001≤b≤0.1); LiₐMnG_{b}O₂ (where 0.90≤a≤1 and 0.001≤b≤0.1); LiₐMn₂G_{b}O₄ (where 0.90≤a≤1 and 0.001≤b≤0.1); LiₐNi_{1-b-c}Mn_{b}B_{c}O_{2-α}F_{α} (where 0.90≤a≤1, 0≤b≤0.5, 0≤c≤0.05 and 0<α<2); LiₐNi_{1-b-c}Mn_{b}B_{c}O_{2-α}F₂ (where 0.90≤a≤1, 0≤b≤0.5, 0≤c≤0.05 and 0<α<2); LiₐNi_{b}E_{c}G_{d}O₂ (where 0.90≤a≤1, 0≤b≤0.9, 0≤c≤0.5 and 0.001≤d≤0.1.); LiₐNi_{b}Co_{c}Mn_{d}GₑO₂ (where 0.90≤a≤1, 0≤b≤0.9, 0≤c≤0.5, 0≤d≤0.5 and 0.001≤e≤0.1); LiₐNiG_{b}O₂ (where 0.90≤a≤1 and 0.001≤b≤0.1); QO₂; QS₂; LiQS₂; V₂O₅; LiV₂O₅; LiIO₂; LiNiVO₄; Li_{(3-f)}J₂(PO₄)₃ (0≤f≤2); Li_{(3-f)}Fe₂(PO₄)₃ (0≤f≤2); and LiFePO₄. In the compounds, A may be Ni, Co, Mn, or a combination thereof; B may be Al, Ni, Co, Mn, Cr, Fe, Mg, Sr, V, a rare earth element, or a combination thereof; D may be O, F, S, P, or a combination thereof; E may be Co, Mn, or a combination thereof; F may be F, S, P, or a combination thereof; G may be Al, Cr, Mn, Fe, Mg, La, Ce, Sr, V, or a combination thereof; Q may be Ti, Mo, Mn, or a combination thereof; I may be Cr, V, Fe, Sc, Y, or a combination thereof; J may be V, Cr, Mn, Co, Ni, Cu, or a combination thereof. A compound having a coating layer added to the surface of the compound may be used as the positive electrode active material, or a mixture of the compound and the compound having a coating layer added thereto may be used. The coating layer added to the surface of the compound may contain, for example, a lithium ion conductive oxide. Examples of the lithium ion conductive oxide include, but are not limited to, LiNbO₃, Li₄Ti₅O₁₂, and Li₃PO₄. The compound forming the coating layer may be amorphous or crystalline. The method of forming the coating layer may consider, for example, spray coating and dipping, but may be selected without limitation within a range that does not adversely affect the physical properties of the positive electrode active material.

If the positive electrode active material is a ternary lithium transition metal oxide such as NCA or NCM, and contains nickel (Ni), the capacity density of the all-solid-state battery may be increased and the metal elution of the positive electrode active material in a charged state may be reduced. Accordingly, the cycle characteristics of the all-solid-state battery in a charged state may be improved.

The shape of the positive electrode active material may be, for example, particle forms such as a sphere and an elliptical sphere. The particle diameter of the positive electrode active material is not particularly limited, and may be within a range applicable to the positive electrode active material of a common all-solid-state secondary battery. The content of the positive electrode active material of the positive electrode is also not particularly limited, and may be within a range applicable to the positive electrode of the common all-solid-state secondary battery.

The solid electrolyte included in the positive electrode active material layer may be, for example, the same as or different from the solid electrolyte included in the solid electrolyte layer. The solid electrolyte included in the positive electrode active material layer may be, but is not limited to, a sulfide-based solid electrolyte, an oxide-based solid electrolyte, a phosphate-based solid electrolyte, or a halide-based solid electrolyte, and may be any electrolyte commonly used in all-solid-state batteries.

The solid electrolyte included in the positive electrode active material layer may have a smaller average particle diameter than, for example, the solid electrolyte included in the solid electrolyte layer. For example, the average particle diameter of the solid electrolyte included in the positive electrode active material layer may be 90% or less, 80% or less, 70% or less, 60% or less, 50% or less, 40% or less, 30% or less, or 20% or less of the average particle diameter of the solid electrolyte included in the solid electrolyte layer.

The binder included in the positive electrode active material layer may be, for example, acrylonitrile butadiene rubber (ABR), butadiene rubber (BR), styrene butadiene rubber (SBR), polytetrafluoroethylene, polyvinylidene fluoride, polyethylene or the like.

The conductive material included in the positive electrode active material layer may be, for example, graphite, carbon black, acetylene black, Ketjen black, carbon fiber, metal powder or the like.

The positive electrode active material layer may further include additives such as fillers, coating agents, dispersants, and ionconductive assistants, and the additives may be used without limitation as long as they are known materials generally used in the electrodes of all-solid-state batteries.

The solid electrolyte layer may include, for example, a sulfide-based solid electrolyte. The sulfide-based solid electrolyte may be, for example, one or more selected from Li₂S-P₂S₅-Li₂O, Li₂S-P₂S₅-Li₂O-LiI, Li₂S-SiS₂, Li₂S-SiS₂-LiI, Li₂S-LiBr-LiI-P₂S₅, Li₂S-SiS₂-LiBr, Li₂S-SiS₂-LiCl, Li₂S-SiS₂-B₂S₃-LiI, Li₂S-SiS₂-Li₃PO₄, Li₂S-SiS₂- LiₚMO_{q} (p and q are positive numbers, and M is one of P, Si, Ge, B, Al, Ga, and In), Li₂S-SiS₂-P₂S₅-LiI, Li₂S-P₂S₅, Li₂S-P₂S₅-LiX (X is a halogen element), Li₂S-B₂S₃, Li₂S-P₂S₅-ZₘSₙ (m and n are positive numbers), Z is one of Ge, Zn or Ga, Li₂S-GeS₂, Li₇₋ₓPS₆₋ₓClₓ (0≤x≤2), Li₇₋ₓPS₆₋ₓBrₓ(0≤x≤2) and Li₇₋ₓPS₆₋ₓIₓ(0≤x≤2). The sulfide-based solid electrolyte may be prepared by treating starting materials such as Li₂S and P₂S₅ by a melting rapid cooling method or a mechanical milling method. In addition, a heat treatment may be performed after the treatment. The solid electrolyte may be in an amorphous, crystalline, or a mixed state thereof. In the present disclosure, the sulfide-based solid electrolyte may include, for example, sulfur (S), phosphorus (P), and lithium (Li) as at least one constituent elements among the above-mentioned sulfide-based solid electrolyte materials.

The sulfide-based solid electrolyte may be, for example, an argyrodite-type compound including one or more selected from Li₇₋ₓPS₆₋ₓClₓ(0≤x≤2), Li₇₋ₓPS₆₋ₓBrₓ(0≤x≤2), and Li₇₋ₓPS₆₋ₓIₓ(0≤x≤2). In particular, the sulfide-based solid electrolyte may be an argyrodite-type compound including one or more selected from Li₆PS₅Cl, Li₆PS₅Br and Li₆PS₅I.

The density of the argyrodite-type solid electrolyte may be, for example, 1.5 to 2.0 grams per cubic centimeter (g/cc). Since the argyrodite-type solid electrolyte has a density of 1.5 g/cc or more, the internal resistance of the all-solid-state secondary battery may be reduced, and penetration of the solid electrolyte by Li may be effectively suppressed.

The elastic modulus of the solid electrolyte may be, for example, 15 to 45 giga pascals (GPa).

The solid electrolyte layer may include, for example, a binder. The binder included in the solid electrolyte layer may be, for example, one of the binder types included in the positive electrode active material layer and/or the anode-free coating layer, but is not limited thereto, and any binder used in the relevant technical field may be possible. The binder included in the solid electrolyte layer may be the same as or different from the binder included in the positive electrode active material layer and/or the anode-free coating layer described above.

The negative electrode current collector may use a known metal that may be used as a current collector of an all-solid-state battery. The negative electrode current collector may use, for example, a material that does not form an alloy or compound with lithium. As the negative electrode current collector, for example, a material selected from the group consisting of copper (Cu), nickel (Ni), aluminum (Al), vanadium (V), gold (Au), platinum (Pt), magnesium (Mg), iron (Fe), titanium (Ti), cobalt (Co), chromium (Cr), zinc (Zn), germanium (Ge), indium (In), and stainless steel may be used, but is not limited thereto, and any material used as an electrode current collector in the relevant technical field may be used as long as it does not hinder the purpose of the present disclosure. The negative electrode current collector may be composed of one of the above-described metals, or may be composed of an alloy or a coating material of two or more metals. The negative electrode current collector may be, for example, in the form of a plate, mesh, or foil, but is not limited thereto.

The all-solid-state battery of the present disclosure may further include, by charging, a metal including lithium or a lithium alloy and/or a metal (layer) thereof between the negative electrode current collector and the anode-free coating layer, and/or within the anode-free coating layer. The lithium alloy may be, for example, a lithium-silver alloy, and in another embodiment, a lithium-aluminum alloy, a lithium-tin alloy, a lithium-indium alloy, a lithium-gold alloy, a lithium-zinc alloy, a lithium-germanium alloy, or a lithium-silicon alloy, but is not limited thereto, and any lithium alloy used in the relevant technical field may be used. The metal or metal layer included between the negative electrode current collector and the anode-free coating layer, and/or within the anode-free coating layer may be composed of one of the alloys or lithium, or may be composed of various types of alloys.

The thickness of the metal layer including lithium or lithium alloy may be, for example, in the range of 1 to 1000 µm, 1 to 500 µm, 1 to 200 µm, 1 to 150 µm, 1 to 100 µm or 1 to 50 µm. The thickness is required to be controlled as described above so that the metal layer may perform its role as a lithium storage well and improve cycle characteristics.

The metal layer may be formed by precipitation between the negative electrode current collector and the anode-free coating layer and/or within the anode-free coating layer by charging after assembling the all-solid-state battery. If the metal layer is formed between the negative electrode current collector and the anode-free coating layer and/or within the anode-free coating layer by charging after assembling the all-solid-state battery, the regions may be, for example, lithium-free regions that do not include lithium in the initial state or the post-discharge state of the all-solid-state battery.

The all-solid-state battery of the present disclosure may be characterized by, for example, having a 1.0C-rate (C) capacity retention of 88% or more relative to the 0.1C capacity. The 1.0C capacity retention relative to the 0.1C capacity may be measured in a manner according to an evaluation example described later. In another embodiment, the all-solid-state battery of the present disclosure may have a 1.0C capacity retention relative to the 0.1C capacity of 89% or more, 90% or more, 91% or more, 92% or more, 93% or more, 94% or more, 95% or more, or 96% or more, and the upper limit is not particularly limited, but may be 99.9% or less, 99% or less, 98% or less, or 97% or less.

The all-solid-state battery of the present disclosure may be characterized by, for example, having a 0.33C capacity retention relative to the 0.1C capacity of 98% or more. The 0.33C capacity retention relative to the 0.1C capacity may be measured in a manner according to the evaluation example described later. In another embodiment, the all-solid-state battery of the present disclosure may have a 0.33C capacity retention relative to the 0.1C capacity of 98.1% or more, 98.2% or more, 98.3% or more, 98.4% or more, 98.5% or more, 98.6% or more, 98.7% or more, 98.8% or more, 98.9% or more, 99% or more, 99.1% or more, or 99.2% or more, and the upper limit is not particularly limited, but may be 99.9% or less or 99.5% or less.

The all-solid-state battery of the present disclosure may be characterized by, for example, having a 0.5C capacity retention relative to the 0.1C capacity of 96% or more. The 0.5C capacity retention relative to the 0.1C capacity may be measured in a manner according to the evaluation example described later. In another embodiment, the all-solid-state battery of the present disclosure may have a 0.5C capacity retention relative to the 0.1C capacity of 96.5% or more, 97% or more, 97.5% or more, or 98% or more, and the upper limit is not particularly limited, but may be 99.9% or less, 99% or less, or 98% or less.

A second aspect of the present disclosure relates to a method for manufacturing an all-solid-state battery using lithium or a lithium alloy as a negative electrode active material.

The matters relating to the first aspect of the present disclosure may be equally applied to the matters relating to the second aspect unless specifically stated otherwise.

The method for manufacturing an all-solid-state battery of the present disclosure may include, for example, an operation of forming an anode-free coating layer on a negative electrode current collector.

The operation of forming the anode-free coating layer on the negative electrode current collector may include, for example, an operation of applying a composition for forming an anode-free coating layer including amorphous carbon and silver nanoparticles onto the negative electrode current collector; and/or an operation of drying the applied composition for forming an anode-free coating layer to form an anode-free coating layer.

The operation of applying the composition for forming an anode-free coating layer including amorphous carbon and silver nanoparticles onto the negative electrode current collector may be performed by, for example, dip coating, T-die coating, or gravure coating, but is not limited thereto and may be performed by a known coating method.

The composition for forming the anode-free coating layer may further include, for example, a binder and/or a solvent, and the contents regarding the anode-free coating layer described above may be applied in the same manner.

The operation of drying the applied composition for forming the anode-free coating layer to form the anode-free coating layer may be performed at a temperature of, for example, 50 to 200°C, and the pressure conditions are not particularly limited, but may be performed in vacuum depending on the case.

The all-solid-state battery according to the manufacturing method of the present disclosure may be characterized by that, for example, if the anode-free coating layer is divided into two parts in the thickness direction and sequentially referred to as a first section and a second section from a section close to the negative electrode current collector, the ratio (C₂/C₁) of the content of the silver nanoparticles (C₂) included in the second section to the content of the silver nanoparticles (C₁) included in the first section after charge and discharge may be within a range of 0.4 to 2.

The silver nanoparticles may be characterized by being, for example, irregularly shaped.

The amorphous carbon and silver nanoparticles may be characterized by being, for example, simply mixed. The present disclosuremay prevent migration of silver nanoparticles due to charge and discharge simply by mixing amorphous carbon and silver nanoparticles included in the anode-free coating layer without separate treatment such as compositing. As a result, an all-solid-state battery in which the distribution characteristics of silver nanoparticles are excellent even after charge and discharge, thereby enabling uniform distribution of resistance within the battery and effectively controlling lithium dendrite growth, may be provided.

In the present disclosure, the manufacture of an all-solid-state battery by manufacturing and laminating a positive electrode, a solid electrolyte layer and the like, may be performed according to a known method.

### Mode for Carrying Out the Invention

Hereinafter, the present disclosure will be explained in detail with reference to examples in order to specifically explain the disclosed the contents of the present disclosure as described above and the intended actions and effects of the present disclosure. However, the examples may be modified into various other forms, and the scope of the present specification is not to be construed as being limited to the examples. It is emphasized that the examples represent the present disclosure and are provided to explain the present disclosure in more detail to those skilled in the art.

### Example.

### (Negative Electrode)

6 g of carbon black (average particle diameter of 41 nm), 2 g of irregularly shaped silver (Ag) nanoparticles, 9.33 g of polyvinylidene fluoride (PVdF) solution (solid content 6%), and 7.19 g of an NMP solution were placed in a thinky mixer container and mixed multiple times at 2000 revolutions per minute (rpm) for 3 minutes. Then, 5 g of an NMP solution was additionally added, and mixing was performed five times for 3 minutes at 2000 rpm to prepare an anode-free coating layer slurry. Then, the slurry was coated on a stainless steel (SUS) foil having a thickness of 10 µm using a bar coater, dried in the air at 80°C for 20 minutes, and then vacuum-dried at 100°C for 12 hours. Through that, a negative electrode in which an anode-free coating layer with a thickness of 14.0 µm and a porosity of 67.1% was formed on the SUS foil, was obtained.

### (Positive Electrode)

LiNi_{0.8}Co_{0.15}Mn_{0.05}O₂ (NCM) as a positive electrode active material, Li₆PS₅Cl in the form of an argyrodite-type crystal as a solid electrolyte, polytetrafluoroethylene (Teflon binder, DuPont) as a binder, and carbon nanofiber (CNF) as a conductive material were prepared. Then, the materials were mixed in a weight ratio of positive electrode active material: solid electrolyte: conductive material: binder = 84: 15: 0.2: 1.2, and the mixture was molded into a large-sized sheet shape to produce a positive electrode sheet. In addition, the positive electrode sheet was pressed onto an 18 µm thick aluminum foil positive electrode current collector to form a positive electrode. The initial charge capacity of the positive electrode (charge capacity at the first cycle) was approximately 20 milliampere-hour (mAh) at 4.25 volts (V) charge. The weight of the positive electrode was approximately 110 milligrams (mg). (Approximately 203 milliampere-hours per gram (mAh/g) per weight of active material)

### (Solid Electrolyte Layer)

A solid electrolyte layer used one including a Li₆PS₅Cl solid electrolyte.

### (All-solid-state Battery)

The positive electrode, solid electrolyte, and negative electrode were laminated and sealed in a pouch under vacuum to fabricate an all-solid-state battery. Here, each part of the positive electrode current collector and the negative electrode current collector was protruded out of the pouch so that the vacuum of the battery was maintained. The protrusions were used as the positive and negative electrode terminals. In addition, the all-solid-state battery was subjected to a hydraulic treatment at 500 mega pascals (MPa) for 30 minutes. By performing the hydrostatic treatment, the characteristics as a battery were greatly improved.

### Comparative Example.

In the manufacture of the negative electrode, the same method as in the Example was used except that spherical silver nanoparticles (DF-SLN-002, Dowa) (average particle diameter of 60 nm) were used instead of irregularly shaped silver nanoparticles, and an all-solid-state battery including a negative electrode in which an anode-free coating layer having a thickness of 16 µm and a porosity of 67.1% wasformed on a SUS foil, was obtained.

### Evaluation Example 1.Silver Nanoparticle Shape

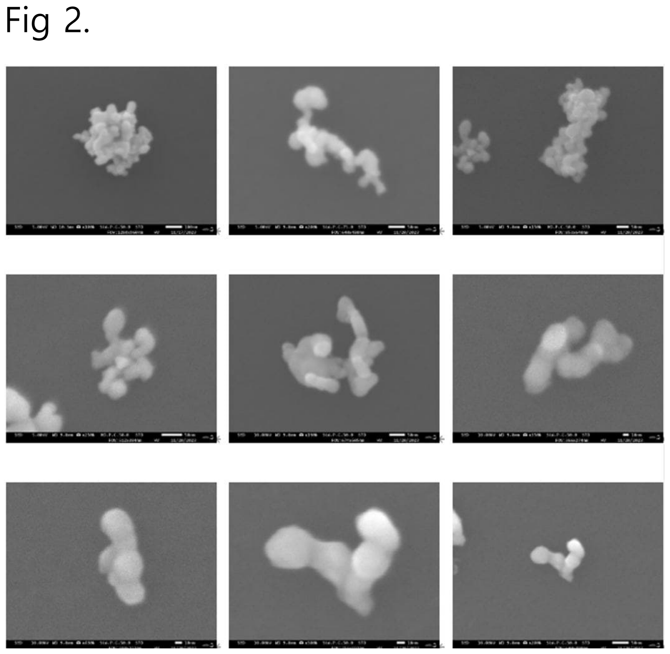

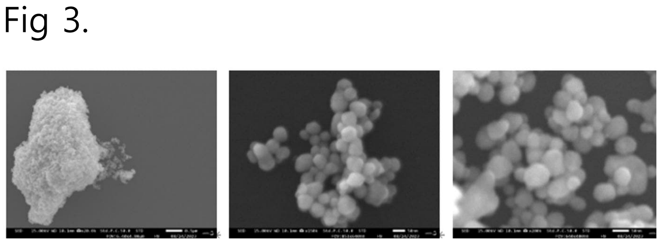

The silver nanoparticles used in each of the Example and Comparative Example were mixed with an ethanol solution, sonicated, and dispersed for more than 1 hour, and then the dispersion was applied to a silicon wafer (Si wafer), dried, and observed for SEM images. As a result, it was confirmed that the silver nanoparticles of the Example were irregularly shaped, unlike the spherical silver nanoparticles of the Comparative Example (FIGS. 2 and 3).

### Evaluation Example 2. Distribution Characteristics of Silver Nanoparticles and Amorphous Carbon

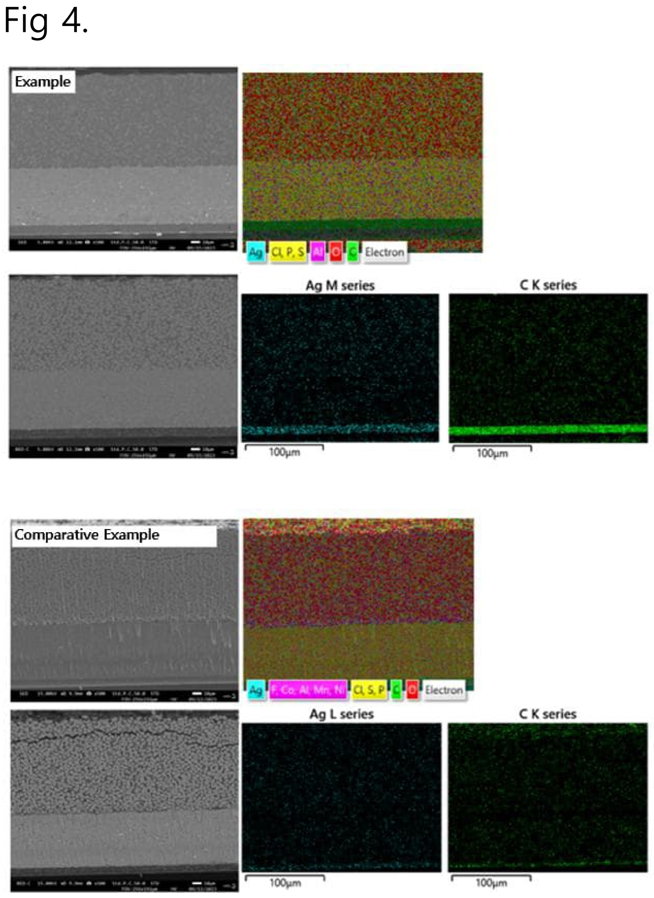

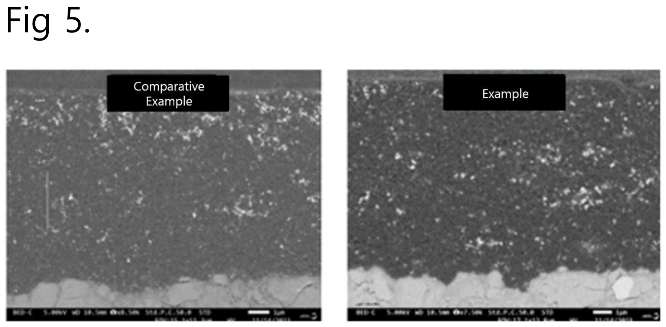

The all-solid-state batteries (pouch-type monocells) of the Example and Comparative Example were respectively activated twice and charged and discharged once, at rates of 0.33C, 0.5C, 1.0C, and 0.1C at an operating voltage range of 4.3 V to 3.0 V and an operating temperature of 60°C, and then charged and discharged once, at a current density of 0.33C to prepare samples. For the samples, a cross-section of the all-solid-state battery excluding the pouch was formed through Cooling Cross-section Polishing (ion milling) under Ar atmosphere and 120 microampere (µA) conditions, and the distribution and interface changes of the positive electrode/electrolyte/negative electrode were confirmed using SEM/EDS (FIG. 4). In addition, the distribution of amorphous carbon and silver nanoparticles in the anode-free coating layer was confirmed in more detail through backscatter electron (BSE) measurement. As the atomic number increased, more backscattered electrons were generated, so silver (atomic number: 47) appeared as a brighter spot than carbon (atomic number: 6), and carbon appeared as a dark spot (FIG. 5). As a result, in both the Example and Comparative Example, lithium alloy precipitation and restoration to the positive electrode occurred during the first charge/discharge process, and it was confirmed that the positive electrode/solid electrolyte layer/anode-free coating layer interface was well maintained. However, in the case of the Example, even after the first charge/discharge, a similar distribution was maintained as the initial anode-free coating layer, but in the case of the Comparative Example, the silver nanoparticles appearing as bright spots did not maintain the initial distribution of the anode-free coating layer and were distributed biasedly in the first section in the direction of the negative electrode current collector (FIGS. 4 and 5).

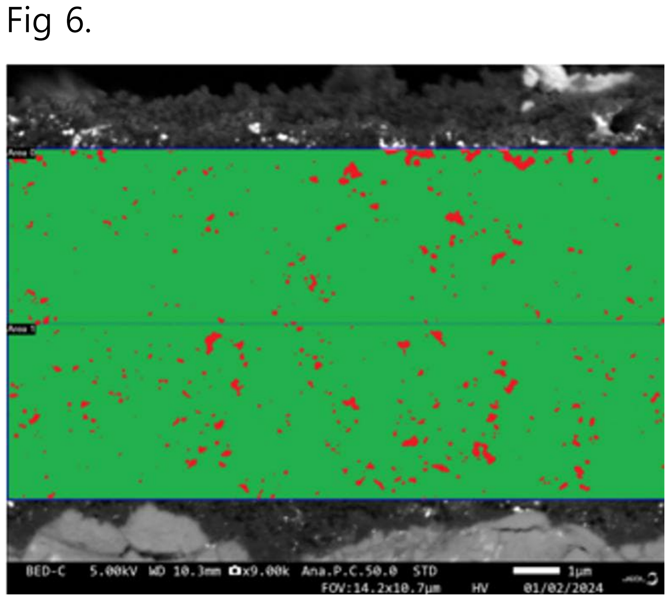

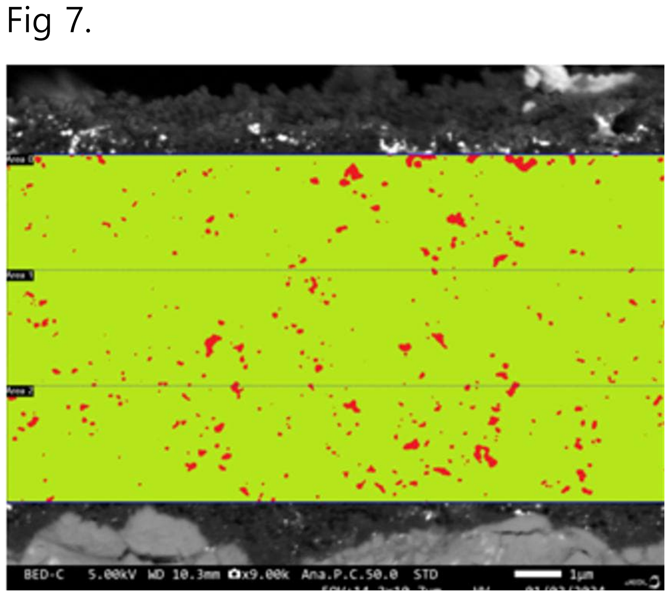

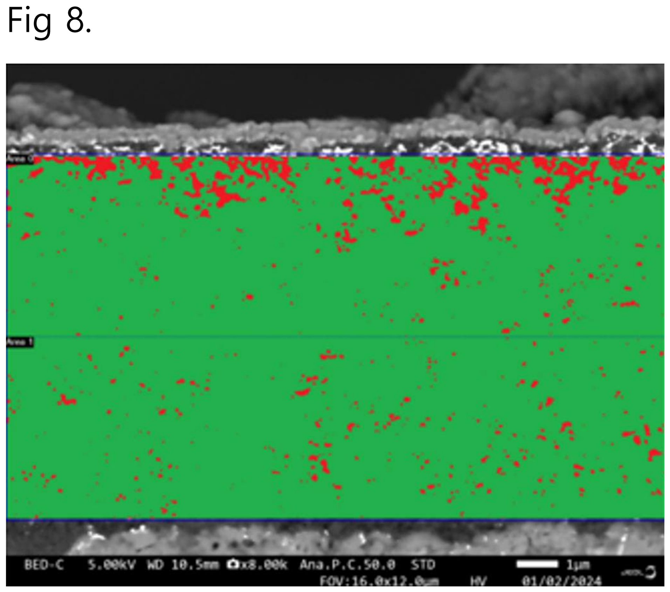

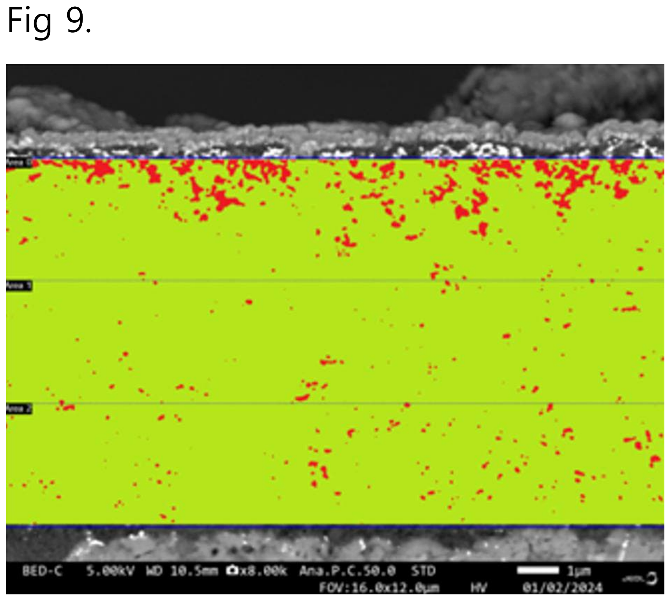

Meanwhile, the all-solid-state batteries (pouch-type monocells) of the Example and Comparative Example were respectively activated twice and charged and discharged once, at rates of 0.33C, 0.5C, 1.0C, and 0.1C at an operating voltage range of 4.3 V to 3.0 V and an operating temperature of 60°C, and then charged and discharged 166 and 147 times at a current density of 0.33C, respectively, to prepare samples. For each sample, a cross-section of the all-solid-state battery excluding the pouch was formed through Cooling Cross-section Polishing (ion milling) under Ar atmosphere and 120 µA conditions, and then an SEM image was taken and converted to a black-and-white image. The area ratio was calculated by distinguishing between the silver nanoparticle area and the remaining area for each section of the anode-free coating layer using an Image Analysis System. Specifically, as shown in FIGS. 6 to 9, the anode-free coating layer located between the negative electrode current collector (upper part) and the solid electrolyte (lower part) in the black-and-white-converted SEM images was divided into two or three parts in the thickness direction, and then the silver nanoparticle area and the remaining area were distinguished based on the brightness intensity divided into 256 levels of [black, white] = [0,255]. In this case, the area with level 255 was designated as the silver nanoparticle area (indicated in red), and the area with levels 96 to 105 were designated as the remaining area (indicated in green). As a result, in the Example, if divided into two, the area ratio of silver nanoparticles in the first section (the ratio of the area of silver nanoparticles to the total area of the first section) (A₁) was 3%, the area ratio of silver nanoparticles in the second section (A₂) was 4%, and A₂/A₁ was 1.33 (FIG. 6). If divided into three, the area ratio of silver nanoparticles in the first section (A₁') was 3%, the area ratio of silver nanoparticles in the second section (A₂') and the area ratio of silver nanoparticles in the third section (A₃') were 6%, and (A₂'+A₃')/A₁' was 2 (FIG. 7). On the other hand, in the Comparative Example, if divided into two, the area ratio of silver nanoparticles in the first section (A₁) was 9%, the area ratio of silver nanoparticles in the second section (A₂) was 3%, and A₂/A₁ was 0.33 (FIG. 8). If divided into three parts, the area ratio (A₁') of the silver nanoparticles in the first section was 10%, the area ratio (A₂') of the silver nanoparticles in the second section and the area ratio (A₃') of the silver nanoparticles in the third section were 3%, so (A₂'+A₃')/A₁' was 0.3 (FIG. 9). As above, even after the all-solid-state battery of the Example performed more cycles than the Comparative Example, the distribution of the silver nanoparticles after discharge was more uniform than that of the Comparative Example.

Through that, it may be found that if the anode-free coating layer includes irregularly shaped silver nanoparticles like the Example, the alloying between lithium ions and silver may be more efficiently achieved, and the uniformity of the resistance distribution within the battery may also be possible, so that excellent reversibility (efficiency, rate characteristics, and life characteristics) may be obtained.

### Evaluation Example 3. X-ray Diffraction (XRD) Analysis of Silver Nanoparticles

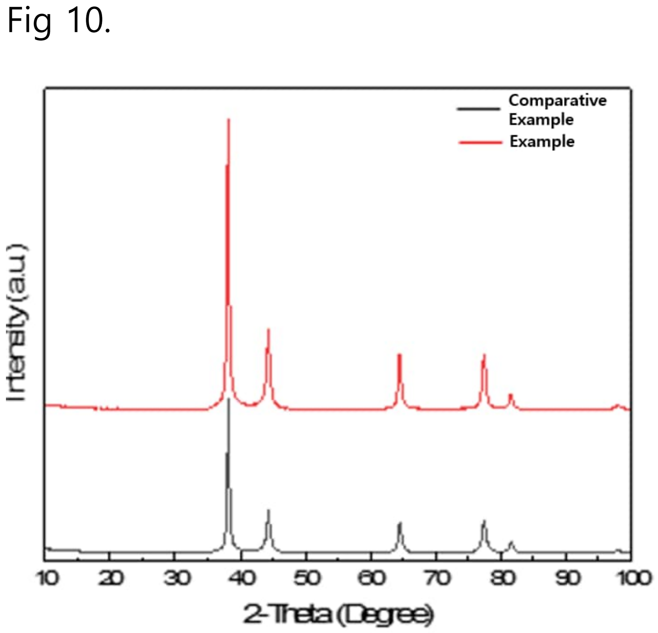

XRD analysis was performed for the silver nanoparticles of the Example and Comparative Example. Specifically, xXRD analysis was performed using a D8 Endeavor X-ray diffractometer (Cu target) of Bruker Co. in a powder type 2-theta mode at a voltage/current of 40 kilovolts (kV)/30 milliamperes (mA). The results are shown in FIG. 10 and Table 1 below.

As a result of confirming the full width at half maximum of each plane of the silver nanoparticles, it was found that the Example and Comparative Example had a difference of 0.01 or more in the full width at half maximums on all of the (111) plane, (200) plane, (220) plane, and (311) plane.

In addition, as a result of confirming the crystal grain size of each plane above, the silver nanoparticles of the Example had crystal grain sizes of 15 to 18.8 nm on the (200) plane, (220) plane, and (311) plane, with a difference of about 3.8 nm between the maximum and minimum values, whereas the silver nanoparticles of the Comparative Example had crystal grain sizes of 14.7 to 15.7 nm on the (200) plane, (220) plane, and (311) plane, with a difference of about 1 nm between the maximum and minimum values. Through this, it may be found that the silver nanoparticles of the Example grew irregularly.

**[Table 1]**

| Division | Full width at half maximum (FWHM) | | Crystal grain size (nm) | |
|---|---|---|---|---|
| | Example | Comparative Example | Example | Comparative Example |
| (111) plane | 0.360 | 0.346 | 23.3 | 24.3 |
| (200) plane | 0.566 | 0.580 | 15.0 | 14.7 |
| (220) plane | 0.497 | 0.595 | 18.8 | 15.7 |
| (311) plane | 0.615 | 0.672 | 16.4 | 15.0 |

### Evaluation Example 4. BET Analysis

The specific surface area and pore characteristics of silver nanoparticles of the Example and Comparative Example were measured according to the commonly used BET method (Brunauer, Emmett, and Teller's method). Specifically, the specific surface area of amorphous carbon was measured by measuring the adsorption amount of N₂ gas at 77 degrees Kelvin (K) using a Micromeritics, ASAP 2460 device after out-gassing for about 2 hours until the residual pressure of each sample became 10⁻³ torr at 298K, and the surface adsorption properties of silver nanoparticles were derived by analyzing the micropore development with S_{BET} and the mesopores as a result of S_{Barrett-Joyner-Halenda} (BJH).

**[Table 2]**

| Division | Example | Comparative Example |
|---|---|---|
| Vₘ [cm³(STP)]/g] | 0.9042 | 1.4746 |
| BET specific surface area [m²/g] | 3.9356 | 6.418 |
| Total pore volume (p/p₀= 0.990) [cm³/g] | 0.07546 | 0.061033 |
| Average pore diameter [nm] | 76.695 | 38.039 |

| | | |
|---|---|---|
| (In Table 2, Vm means the total pore volume per the weight of the sample) | | |

### Evaluation Example 5. Capacity Retention

The all-solid-state batteries (pouch-type monocells) of the Example and Comparative Example were charged under the conditions of 0.1C, 4.3V CC/CV, and 0.05C cut-off at an operating voltage range of 4.3V to 3.0V and an operating temperature of 60°C, and discharged and activated twice under the conditions of 0.1C, 3.0V, and CC, and the capacity retention was measured when the rate evaluation was performed once at a current density of 0.33C, 0.5C, 1.0C, 0.1C, and 0.33C.

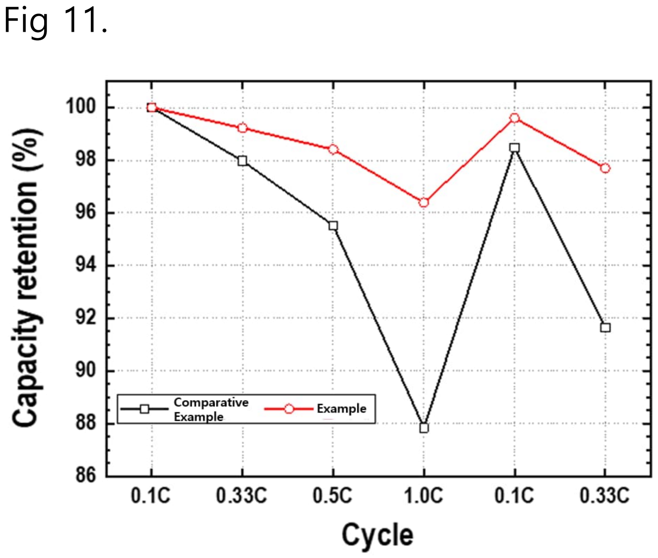

As a result, the capacity retention of each of the Example and Comparative Example was confirmed as shown in Table 3 below and FIG. 11. The capacity retention of the Example was generally superior to that of the Comparative Example, and it may be confirmed that the capacity retention at a high rate (1.0C) was particularly excellent.

**[Table 3]**

| Division | Capacity retention (% compared to 0.1 C capacity) | | | | | |
|---|---|---|---|---|---|---|
| | 0.1 C | 0.33 C | 0.5 C | 1.0 C | 0.1 C | 0.33 C |
| Example | 100 | 99.22 | 98.41 | 96.39 | 99.60 | 97.70 |
| Comparative Example | 100 | 97.98 | 95.53 | 87.84 | 98.49 | 91.65 |

| | | | | | | |
|---|---|---|---|---|---|---|
| (In Table 3, 0.1C capacity means the capacity after the two activations) | | | | | | |

### Evaluation Example 6. Life Characteristics

The all-solid-state batteries (pouch-type monocells) of the Example and Comparative Example were respectively activated twice and charged and discharged once at rates of 0.33C, 0.5C, 1.0C, and 0.1C in the operating voltage range of 4.3V to 3.0V and the operating temperature of 60°C, and then the capacity retention according to the cycle was measured at a current density of 0.33C.

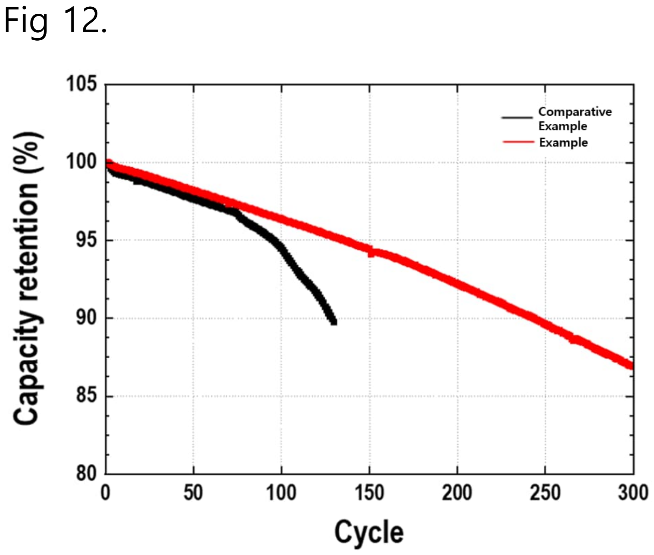

As a result, the Example showed an overall superior capacity retention compared to the Comparative Example for each cycle. In addition, the Comparative Example showed a sharp decrease in capacity retention after about 75 cycles and then short-circuited after about 130 cycles, while the Example maintained a gradual decrease in capacity retention according to the cycle and operated without short-circuiting for 300 cycles (FIG. 12).

## Claims

1. An all-solid-state battery using lithium or a lithium alloy as a negative electrode active material, the all-solid-state battery comprising a positive electrode, a solid electrolyte layer, an anode-free coating layer and a negative electrode current collector, wherein
the anode-free coating layer comprises amorphous carbon and silver nanoparticles, and
when the anode-free coating layer is divided into two parts in a thickness direction and sequentially referred to as a first section and a second section starting from a section close to the negative electrode collector, a ratio (C₂/C₁) of the content of the silver nanoparticles (C₂) comprised in the second section to the content of the silver nanoparticles (C₁) comprised in the first section after charge and discharge is within a range of 0.4 to 2.

2. The all-solid-state battery according to claim 1, wherein, when the anode-free coating layer is divided into three parts in the thickness direction and sequentially referred to as a first section, a second section, and a third section from a section close to the negative electrode collector, a ratio ((C₂'+C₃')/C₁') of the sum (C₂'+C₃') of the contents of the silver nanoparticles comprised in the second section and the third section to the content (C₁') of the silver nanoparticles comprised in the first section after charge and discharge is within arange of 0.4 to 5.

3. The all-solid-state battery according to claim 1, wherein the silver nanoparticles are irregularly shaped.

4. The all-solid-state battery according to claim 1, wherein the maximum value of a difference among (200) plane crystal grain size, (220) plane crystal grain size, and (311) plane crystal grain size of the silver nanoparticles is 1.5 nanometers (nm) or more.

5. The all-solid-state battery according to claim 1, wherein a Brunauer, Emmett and Teller (BET) specific surface area of the silver nanoparticles is 6 square meters per gram (m²/g) or less.

6. The all-solid-state battery according to claim 1, wherein an average pore size of the silver nanoparticles is 40 nm or more.

7. The all-solid-state battery according to claim 1, wherein a total pore volume of the silver nanoparticles is 0.065 cubic centimeters per gram (cm³/g) or more.

8. The all-solid-state battery according to claim 1, wherein the amorphous carbon is one or more selected from the group consisting of carbon black, acetylene black, furnace black, Ketjen black and graphene.

9. The all-solid-state battery according to claim 1, wherein the silver nanoparticles are comprised in a range of 10 parts by weight to 50 parts by weight relative to 100 parts by weight of the amorphous carbon.

10. The all-solid-state battery according to claim 1, wherein the anode-free coating layer further comprises a binder.

11. The all-solid-state battery according to claim 1, wherein the solid electrolyte layer comprises a sulfide-based solid electrolyte.

12. The all-solid-state battery according to claim 11, wherein the sulfide-based solid electrolyte is one or more selected from Li₂S-P₂S₅-Li₂O, Li₂S-P₂S₅-Li₂O-LiI, Li₂S-LiBr-LiI-P₂S₅, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-Li₃PO₄, Li₂S-SiS₂-LiₚMO_{q} (p and q are positive numbers, and M is one of P, Si, Ge, B, Al, Ga and In), Li₂S-SiS₂-P₂S₅-LiI, Li₂S-P₂S₃, Li₂S-P₂S₅-LiX (X is a halogen atom), Li₂S-B₂S₃, Li₂S-P₂S₅-ZₘSₙ (m and n are positive numbers), Z is one of Ge, Zn or Ga, Li₂S-GeS₂, Li₇₋ₓPS₆₋ₓClₓ (0≤x≤2), Li₇₋ₓPS₆₋ₓBrₓ (0≤x≤2) and Li₇₋ₓPS₆₋ₓIₓ (0≤x≤2).

13. The all-solid-state battery according to claim 1, wherein a 1.0 C-rate (C) capacity retention is 88% or more compared to 0.1 C capacity.

14. A method for manufacturing an all-solid-state battery using lithium or a lithium alloy as a negative electrode active material,wherein,
the method for manufacturing an all-solid-state battery comprises forming an anode-free coating layer on a negative electrode current collector,
the forming of the anode-free coating layer on the negative electrode current collector, comprises: applying a composition for forming an anode-free coating layer comprising amorphous carbon and silver nanoparticles; and drying the applied composition for forming an anode-free coating layer to form an anode-free coating layer, and
when the anode-free coating layer is divided into two parts in a thickness direction and sequentially referred to as a first section and a second section starting from a section close to the negative electrode current collector, a ratio (C₂/C₁) of the content of the silver nanoparticles (C₂) comprised in the second section to the content of the silver nanoparticles (C₁) comprised in the first section after charge and discharge is within a range of 0.4 to 2.

15. The method for manufacturing an all-solid-state battery according to claim 14, wherein the silver nanoparticles are irregularly shaped.
